Europäisches Patentamt

(19) European Patent Office

Office européen des brevets

(11) Publication number: **0 064 792**
**A2**

## (12) EUROPEAN PATENT APPLICATION

(21) Application number: **82200533.6**

(22) Date of filing: **04.05.82**

(51) Int. Cl.³: **A 47 G 9/02**

(30) Priority: **13.05.81 BE 2059157**

(43) Date of publication of application:
**17.11.82 Bulletin 82/46**

(84) Designated Contracting States:
**AT CH DE FR GB LI NL SE**

(71) Applicant: POPPE, Willy
Heimolenstraat 147
B-2700 SINT-NIKLAAS(BE)

(72) Inventor: POPPE, Willy
Heimolenstraat 147
B-2700 SINT-NIKLAAS(BE)

(74) Representative: Bockstael, Daniel
M.F.J. Bockstael Arenbergstraat 13
B-2000 Anvers(BE)

(54) Insulating textile article.

(57) Insulating textile article of the type consisting of a pack composed of two mutually and locally connected textile layers between which an insulating filler is inserted, characterized by the fact that said article consists of two such packs, connected on and to each other in such a manner that the said connections of one pack are staggered with respect to the connections of the other pack.

Fig. 1

1

"Insulating textile article"

The present invention covers insulating textile articles, more particularly of the type consisting of two mutually and locally connected textile layers, between which an insulating filler is inserted.

Examples of such articles are down blankets, bed spreads, sleeping bags, etc., the filler of which is selected to obtain thermal insulation or acoustic screens such as sound dampers.

The problem with this kind of articles is that the areas of connection between said textile layers comprise little or no insulation filler at all.  So, such connections make undesirable thermal or acoustic bridges.

To remedy this drawback it has already been suggested to interconnect the said two textile layers by means of an undulated or zig-zagged intermediate layer, also made of textile, after which the thus arising casings between said layers are filled with down, fibres or similar material.  Qua insulation this solution is satisfactory.  But economically it is not, because of manufacturing difficulties.

The purpose of the present invention is to provide another solution to this problem. This purpose is attained by means of an insulating textile article, of the type consisting of a pack composed of two mutually and locally connected textile layers between which an insulating filler is inserted, featuring that said article comprises two such packs, interconnected in such a manner that the said connections of one pack are staggered with respect to the connections of the other pack.

For clearer explanation the invention is described in more detail by referring to schematic, non-limiting, attached drawings in which :

> Figure 1 shows an exploded section of a pack to obtain an article according to the invention;
> Figure 2 is a section of an article obtained by combining two packs according to Figure 1;
> Figure 3 is a schematic section through an alternative of the fillers of each pack and shows these fillers in their relative positions in the final product, and
> Figure 4 a means to obtain two layers of undulated fillers.

Al already mentioned in the introduction, an insulating article according to the invention is of the type consisting of two mutually and locally connected textile layers $\underline{1}$ and $\underline{2}$, between which a filler $\underline{3}$ is inserted. In this example the filler consists of a layer of polyester fibres.

The said mutual and local connections are e.g. a series of parallel seams $\underline{4}$.

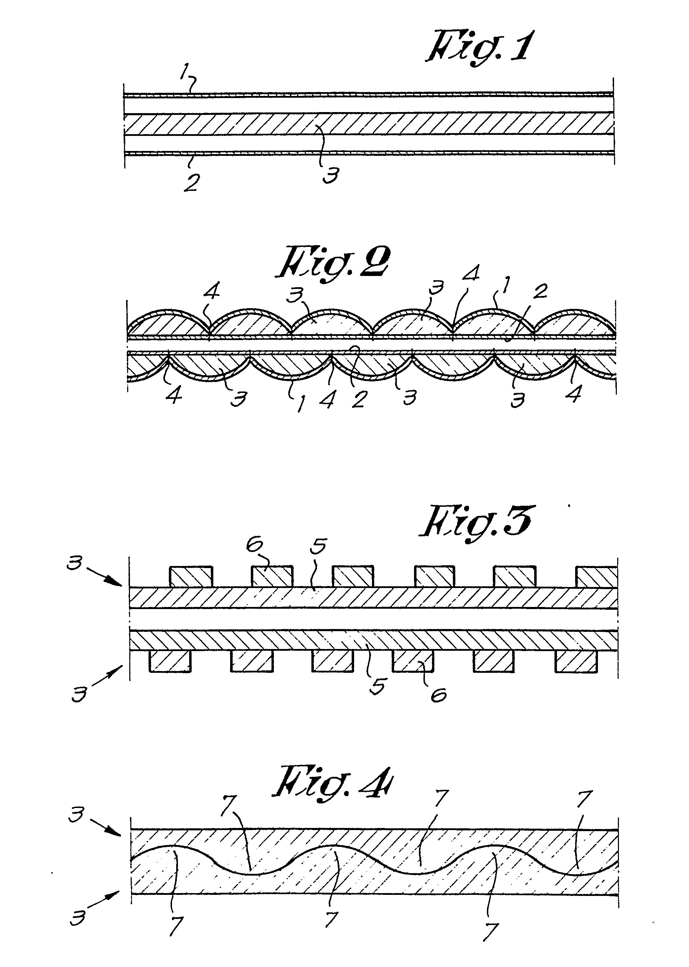

To obtain an article according to the invention, two packs $\underline{1}$-$\underline{3}$ are placed on each other as shown in Figure 2. It is seen that the seams $\underline{4}$ of one pack are staggered with respect to those of the other pack.

In order to obtain an elegant outer aspect of the article, pre-shaped fillers should be used by preference.

By way of example, Figure 3 shows fillers consisting of polyester fibres 5, on one side of which parallel strips of polyester fibres 6 are glued.

Figure 4 shows how a relatively thick layer of polyester fibres can be cut through to obtain two fillers, each comprising a flat and an undulated side 7.

Interconnection between the two packs of an article is effected e.g. along the edges of the packs, for example by means of classical finishing ribbons.

Layer 2 of each pack may be a meshwork, which also confers better dimensional stability to the article.

Many alternative embodiments can of course be considered within the scope of the attached claims.

Claims.

1.- Insulating textile article of the type consisting of a pack comprising two mutually and locally connected textile layers (1-2) between which an insulating filler is inserted, characterized by the fact that said article consists of two such packs interconnected in such a manner that the said connections of one pack are staggered with respect to the connections of the other pack.

2.- Insulating article according to claim 1, characterized by the fact that a layer of insulating material is used as filler (3) for each pack, one side of this layer being flat and the other side undulated, respectively ribbed, said packs being attached on and to each other so that said flat sides of the fillers are directed towards one another.

3.- Insulating article according to claim 2, characterized by the fact that the layers (1-2) of insulating material consist of polyester fibres (5).

4.- Insulating article according to claim 3, characterized by the fact that the textile layer applied against the flat side of the fillers consists of a meshwork (2).

5.- Insulating article according to claim 2, characterized by the fact that each ribbed filler consists of a material layer on which parallel strips (6) of the same material have been glued.

6.- Insulating textile article, mainly as described above and shown in the attached drawings.

*Fig. 1*

*Fig. 2*

*Fig. 3*

*Fig. 4*